# EUROPÄISCHE PATENTSCHRIFT

(11) **EP 0 439 744 B1**
(45) Veröffentlichungstag und Bekanntmachung des Hinweises auf die Patenterteilung: **25.08.1993**
(21) Anmeldenummer: 90123880.8
(22) Anmeldetag: 12.12.1990
(51) Int. Cl.: C01G 39/00, C01G 3/12, C22B 34/34, C22B 3/44

(54) **Verfahren zur Abtrennung von Kupfer-Verunreinigungen aus Molybdatlösungen**
Method for separating copper impurities from molybdate solutions
Procédé pour séparer des solutions de molybdate d'impuretés de cuivre

(30) Priorität: 31.01.1990 DE 4002728
(43) Veröffentlichungstag der Anmeldung: 07.08.1991
(73) Patentinhaber: H.C. Starck GmbH & Co. KG, 38642 Goslar (DE)
(72) Erfinder: Weber, Theodor Alexander, Dr., W-3380 Goslar-Jerstedt (DE); Kummer, Wolfgang, W-3380 Goslar 1 (DE)
(74) Vertreter: Steiling, Lothar, Dr.

(56) Entgegenhaltungen:
- US-A- 2 693 405
- US-A- 4 525 331
- US-A- 4 596 701
- METADEX, Band 86, Nr. 6, Zusammenfassung Nr. 42-696; C.C. NESBITT et al.: "Use of thiourea for precipitation of heavy metals in metallurgical operation effluents"
- "Gmelin, Handbuch der Anorganischen Chemie", System Nr. 53, Teil A-1, 1977, Seiten 26-31, Springer-Verlag, Berlin, DE

## Beschreibung

Die vorliegende Erfindung betrifft ein Verfahren zur rückstandsfreien Abtrennung von Kupfer-Verunreinigungen aus wäßrigen Ammoniummolybdatlösungen durch Fällen der Kupferionen mittels sulfidischen Fällungsmitteln als Kupfersulfid.

Als Rohstoff für die Gewinnung reiner und reinster Molybdänverbindungen wird in der Regel Molybdänit-Konzentrat (MoS₂) eingesetzt, das nach dem Abrösten des Schwefelanteils noch bis zu 2 % Kupfer als unerwünschte Verunreinigung enthalten kann. Das Kupfer ist wegen seiner Löslichkeit in Ammoniak bei der Herstellung von Ammoniummolybdatlösungen äußerst schädlich und es gibt eine große Zahl von Veröffentlichungen, die die Entfernung von Kupfer aus Molybdänitröstgut oder aus den Ammoniummolybdatlösungen beschreiben (Gmelins Handbuch der anorg. Chemie, System Nr. 53, Erg. Bd. A1, S. 26-31).

Bekannte Reagenzien zur Fällung von Kupferionen aus den Ammoniummolybdatlösungen sind Natriumsulfid und/oder Ammonium(poly)sulfid oder Schwefelwasserstoff.

Alle drei genannten Fällungsreagenzien erzeugen jedoch in ammoniakalischer Lösung sehr voluminöse Kupfersulfidniederschläge mit schlechten Sedimentations- und Filtrationseigenschaften, die nach Abtrennung mittels Filterpresse durchschnittlich 50 % Mutterlauge und damit auch beträchtliche Molybdänmengen (bis zu 20 % Molybdän in Trockensubstanz) einschließen, die als Verlust betrachtet werden müssen. Dadurch wird auch eine direkte Verwertung des Kupfersulfids als Kupferrohstoff unmöglich.

Zur vollständigen Fällung der Kupferspuren ist auch der Einsatz eines Überschusses an Sulfid-Schwefel notwendig. Alkalisulfide führen dabei zu einer Verunreinigung der Ammoniummolybdatlösungen mit Alkalispuren, die aus dem Produkt nicht zu entfernen sind.

Beim Einsatz von Ammoniumsulfid oder Schwefelwasserstoff führt der überschüssige Schwefel zu einer Verunreinigung des Produktes. Schwefelwasserstoff und Ammoniumsulfidlösung als Fällungsreagenzien weisen außerdem hohe Gefahrenpotentiale bei der betrieblichen Anwendung auf-Die stöchiometrische Dosierung dieser Fällungsreagenzien zur Vermeidung der Verunreinigung der Ammoniummolybdatlauge durch überschüssige Sulfidionen ist sehr problematisch.

Die Reinheitsforderungen an das Endprodukt Ammoniummolybdat oder Molybdänoxid (Molybdänsäure) sind jedoch heute so hoch, daß die mit dem Reagensüberschuß eingebrachten Verunreinigungen nicht hingenommen werden können.

Die Fällung von Schwermetallen im Zuge hydrometallurgischer Verfahren aus kupferhaltigen Lösungen mit Thioharnstoff als Sulfid-Donator ist bekannt (Conference: Extraction Metallurgy 1985, London, UK, 9-12 Sept. 1985; Referat in Datenbank METADEX 86(6):42-696). In diesen Verfahren wird generell mit überschüssigem Reagens gearbeitet, so daß die Verunreinigung der Lösungen mit unverbrauchtem Reagens und/oder Folgeprodukten (Schwefelverbindungen) desselben gerechnet werden muß.

Die Aufgabe der vorliegenden Erfindung besteht darin, ein Verfahren anzugeben, daß die quantitative Fällung von Kupferionen aus Ammoniummolybdatlösungen ohne die beschriebenen Nachteile ermöglicht.

Es wurde nun gefunden, daß dieses dadurch gelöst werden kann, daß man Thioharnstoff (NH₂)₂CS als Fällungsmittel in die ammoniakalischen Ammoniummolybdatlösungen einbringt.

Gegenstand dieser Erfindung ist somit ein Verfahren zur rückstandsfreien Abtrennung von Kupferverunreinigungen aus wäßrigen Ammoniummolybdatlösungen durch Fällen der Kupferionen mittels sulfidischen Fällungsmitteln als Kupfersulfid, wobei das sulfidische Fällungsmittel Thioharnstoff (NH₂)₂CS ist.

Ebenso werden andere unter ammoniakalischen Bedingungen fällbare Metallverbindungen als Sulfide gefällt.

Besonders vorteilhaft ist die Ausführungsform des erfindungsgemäßen Verfahrens, wonach maximal stöchiometrische Mengen Thioharnstoff in die Ammoniummolybdatlösungen eingebracht und die Lösungen erwärmt werden.

Hierdurch wird der Fällungsvorgang beschleunigt und auch vervollständigt. Besonders gute Resultate werden erzielt, wenn die Lösungen auf Temperaturen oberhalb 60°C bis maximal 100°C erwärmt werden. Bevorzugt werden die Ammoniummolybdatlösungen mit dem Fällungsreagens für mindestens 30 Minuten auf Reaktionstemperatur gehalten. Hierbei sollte ein pH-Wert von großer als 8 eingehalten werden.

Das erfindungsgemäß ausgefällte Kupfersulfid ist kristallin und hat hervorragende Sedimentations- und Filtrationseigenschaften. Es nimmt im Reaktionsgefäß weniger als 20 % des Sedimentationsvolumens eines mit Ammoniumsulfid gefällten Kupfersulfids ein und setzt sich in sehr kurzer Zeit vollständig ab. Nach Filtration läßt sich der Niederschlag mit Wasser auf einen Restmolybdängehalt von <1 % auswaschen, wodurch eine direkte Verwertung als Kupferrohstoff ermöglicht wird.

Thioharnstoff läßt sich entsprechend dem Kupfergehalt der Ammoniummolybdatlauge exakt in fester Form zudosieren. Bei der erfindungsgemäßen Fällung treten keine gefährlichen Schwefelwasserstoffemissionen auf.

Der Zerfall des Reagens (NH₂)₂CS erfolgt in ammoniakalischer Lösung unter hydrolytischer Zersetzung in H₂S und Cyanamid (NH₂CN). Letzteres zersetzt sich im Zuge der Molybdänsäurefällung in saurem Milieu zu NH₃ und Co₂. Diese Reaktion gewährleistet die restlose Beseitigung der unerwünschten Folgeprodukte aus den Molybdänsäure-produkten. Das quantitativ ausgefällte Kupfersulfid kann kristallin und in leicht abscheidbarer Form aus der Molybdatlösung abgetrennt werden. Dazu kann man sich einer Dekantierung, Filtration oder Zentrifugation bedienen.

Im folgenden wird die Erfindung beispielhaft beschrieben, ohne daß hierin eine Einschränkung zu sehen ist.

### Beispiel

Eine mit 3,5 g/l Kupfer verunreinigte Ammoniummolybdatlauge mit ca. 160 g/l Molybdängehalt wurde durch Zugabe von Ammoniakwasser auf einen pH-Wert von 8,5 eingestellt. In die gerührte Lösung wurden 4,2 g/l Thioharnstoff eingetragen (1,2 g Thioharnstoff pro 1 g Kupfer) und danach wurde die Lösung auf 80°C erwärmt. Nach ca. 15 Minuten begann die Ausscheidung von Kupfersulfid. Die Reaktionstemperatur wurde für 2 Stunden aufrechterhalten, um die Fällung zu vervollständigen. Der CuS-Niederschlag wurde durch Dekantieren der warmen Lösung größtenteils abgetrennt, die dekantierte Ammoniummolybdatlauge wurde zusätzlich über ein feines Filter von CuS-Resten befreit. Die gereinigte Ammoniummolybdatlauge wies nach der Cu-Abtrennung noch einen Restgehalt von <10 mg/l auf. Der nachgewaschene Cu-Sulfid-Niederschlag enthielt <1 Gew.-% Molybdän.

## Patentansprüche

1. Verfahren zur rückstandsfreien Abtrennung von Kupferverunreinigungen aus wäßrigen Ammoniummolybdatlösungen durch Fällen der Kupferionen mittels sulfidischen Fällungsmitteln als Kupfersulfid, dadurch gekennzeichnet, daß das sulfidische Fällungsmittel Thioharnstoff (NH₂)₂CS ist.

2. Verfahren gemäß Anspruch 1, dadurch gekennzeichnet, daß maximal stöchiometrische Mengen Thioharnstoff in die Ammoniummolybdatlösungen eingebracht und die Lösungen erwärmt werden.

3. Verfahren gemäß einem der Ansprüche 1 oder 2, dadurch gekennzeichnet, daß die Lösungen auf Temperaturen oberhalb 60°C bis maximal 100°C erwärmt werden.

4. Verfahren gemäß einem oder mehrerer der Ansprüche 1 bis 3, dadurch gekennzeichnet, daß die Ammoniummolybdatlösungen mit dem Fällungsreagens für mindestens 30 Minuten auf Reaktionstemperatur gehalten werden.

5. Verfähren gemäß einem oder mehrerer der Ansprüche 1 bis 4, dadurch gekennzeichnet, daß ein pH-Wert von größer als 8 eingehalten wird.

## Claims

1. A process for the complete removal of copper impurities from aqueous ammonium molybdate solutions by precipitation of the copper ions as copper sulfide using sulfidic precipitants, characterized in that the sulfidic precipitant is thiourea (NH₂)₂CS.

2. A process as claimed in claim 1, characterized in that at most stoichiometric quantities of thiourea are introduced into the ammonium molybdate solutions and the solutions are heated.

3. A process as claimed in claim 1 or 2, characterized in that the solutions are heated to temperatures above 60°C to at most 100°C.

4. A process as claimed in one or more of claims 1 to 3, characterized in that the ammonium molybdate solutions containing the precipitation reagent are kept at the reaction temperature for at least 30 minutes.

5. A process as claimed in one or more of claims 1 to 4, characterized in that a pH value above 8 is maintained.

## Revendications

1. Procédé de séparation, ne laissant pas de résidus, d'impuretés constituées de cuivre de solutions aqueuses de molybdate d'ammonium par précipitation des ions du cuivre, sous forme de sulfure de cuivre, au moyen d'un agent de précipitation sulfuré, caractérisé en ce que l'agent de précipitation sulfuré est la thio-urée (NH₂)₂CS.

2. Procédé selon la revendication 1, caractérisé en ce qu'on introduit dans les solutions de molybdate d'ammonium des quantités au maximum stoechiométriques de thio-urée et qu'on chauffe les solutions.

3. Procédé selon la revendication 1 ou 2, caractérisé en ce qu'on chauffe les solutions à des températures supérieures à 60°C jusqu'à un maximum de 100°C.

4. Procédé selon l'une ou plusieurs des revendications 1 à 3, caractérisé en ce qu'on maintient les solutions de molybdate d'ammonium en présence du réactif de précipitation pendant au moins 30 min à la température réactionnelle.

5. Procédé selon l'une ou plusieurs des revendications 1 à 4, caractérisé en ce qu'on maintient le pH à une valeur supérieure à 8.
